# EUROPÄISCHE PATENTSCHRIFT

(11) **EP 1 972 894 B1**
(45) Veröffentlichungstag und Bekanntmachung des Hinweises auf die Patenterteilung: **15.06.2011**
(21) Anmeldenummer: 07005393.9
(22) Anmeldetag: 15.03.2007
(51) Int. Cl.: G01C 21/26, G08G 1/123

(54) **Verfahren, computergestützte Vorrichtung und System zur Wegstreckenbestimmung**
Method, computer based device and system for determining a travelled distance
Procédé, dispositif assisté par ordinateur et système destinés à la détermination d'une distance parcourue

(43) Veröffentlichungstag der Anmeldung: 24.09.2008
(73) Patentinhaber: Fraunhofer-Gesellschaft zur Förderung der angewandten Forschung e.V., 80686 München (DE)
(72) Erfinder: Holtkamp, Bernhard, Dr., 45665 Recklinghausen (DE); Lindert, Frank, Dr., 48683 Ahaus (DE)
(74) Vertreter: Pfenning, Meinig & Partner GbR

(56) Entgegenhaltungen:
- EP-A1- 0 899 542
- WO-A-00/48058
- US-A- 5 331 561

## Beschreibung

Die vorliegende Erfindung bezieht sich auf ein Wegstreckenbestimmungsverfahren, mit dem die Bestimmung derjenigen Wegstrecke eines Untersuchungsobjektes, welche dieses Untersuchungsobjekt (welches beispielsweise eine Person ist) auf einem vorbestimmten Wegenetz, auf welchem sich mindestens ein Referenzobjekt (beispielsweise ein Transportmittel wie ein Bus) bewegt und/oder bewegt hat, in räumlicher und zeitlicher Übereinstimmung (also beispielsweise innerhalb des Transportmittels) mit einem Referenzobjekt zurückgelegt hat. Die Erfindung bezieht sich ebenso auf eine computergestützte Wegstreckenbestimmungseinheit und ein System aus einer solchen Einheit und einer Sendeeinheit, welche zur Ausführung des vorgenannten Verfahrens ausgebildet sind.

Nachfolgend werden im Rahmen der Beschreibung der Erfindung die folgenden Begriffsbestimmungen verwendet: Bei den transportierten Objekten (nachfolgend Untersuchungsobjekte genannt) handelt es sich um autonome Objekte, die sich sowohl innerhalb eines Wegenetzes als auch außerhalb bewegen können. Bewegungen innerhalb eines Wegenetzes erfolgen mit Hilfe von Transportobjekten (nachfolgend Referenzobjekte genannt), also z.B. innerhalb der Transportobjekte.

Die Referenzobjekte bewegen sich nur innerhalb eines definierten Wegenetzes. Es können mehrere Referenzobjekte in einem Wegenetz existieren (z.B. Metrozüge in einem U-Bahnnetz); Referenzobjekte können unterschiedlichen Typs sein (z.B. ICE und RE im Netz der Deutschen Bahn).

Es können mehrere Wegenetze verschiedenen Typs existieren, die dann ein gemeinsames Gesamt-Wegenetz ausbilden (z.B. Schienennetz der Deutschen Bahn und innerdeutsches Flugnetz). Wegenetze verschiedenen Typs können sich dabei im Rahmen der Ausbildung des Gesamt-Wegenetzes (nachfolgend vereinfacht ebenso als "Wegenetz" bezeichnet) überlappen (z.B. Buslinien und Metro in einem ÖPNV-Netz, welches aus dem Schienennetz der Metro und dem Straßennetz der Busse gebildet wird). Untersuchungsobjekte können zwischen Teil-Wegenetzen verschiedenen Typs innerhalb des Gesamt-Wegenetzes wechseln.

Zur Bestimmung der zurückgelegten Wegstrecke eines Untersuchungsobjekts müssen mindestens Start- und Endpunkt der Strecke bekannt sein. Bei komplexeren Wegenetzen sind eventuell alternative Wege zwischen Start- und Endpunkt möglich. In diesem Fall müssen auch Zwischenpunkte ermittelt werden, um eine eindeutige Bestimmung der Wegstrecke zu ermöglichen.

Die Bestimmung der Wegstrecken von transportierten Objekten in einem definierten Wegenetz stellt einen wichtigen Bestandteil unterschiedlicher Anwendungen dar. So liefert beispielsweise die Wegstrecke einen wesentlichen Parameter für die Berechnung wegabhängiger Transportleistungen (Stichwort Ticketing). In anderen Fällen dient sie als Nachweis der Beförderung (Stichwort Tracking).

Verfahren zur Bestimmung der Wegstrecke eines Untersuchungsobjekts sind bereits aus dem Stand der Technik bekannt. Die vom Objekt zurückgelegte Wegstrecke wird dabei auf folgende verschiedene Weisen ermittelt:
- Spezifikation von Start- und Endpunkt (z.B. beim Erwerb eines Tickets, siehe Deutsche Bahn; ÖPNV-Netze mit zahlencodierten Haltestellen) vor dem Zurücklegen der Wegstrecke
- Explizites Checkin eines Untersuchungsobjekts bei einem Referenzobjekt am Startpunkt und Checkout am Endpunkt über Zugangskontrollsysteme (CICO-Verfahren) (z.B. Smartcard-basiert; siehe ÖPNV in Rotterdam, Niederlande, oder Hanau RMV)
- Automatische Erkennung des Start- und Endpunkts über Sensorik für von Untersuchungsobjekten mitgeführte Authentisierungsmedien in bzw. durch Referenzobjekte (Be in/Be out-Verfahren; BIBO-Verfahren) in Verbindung mit Informationen über die Position der Referenzobjekte bei Zu- und Abgang eines Untersuchungsobjekts
- Verfahren zur Bestimmung der Wegstreckenübereinstimmung zweier sich bewegender Objekte

Lösungen auf der Basis vorab spezifizierter Strecken sind nicht flexibel, d.h. dynamische Änderungen der ursprünglich geplanten Wegstrecke sind nicht einfach möglich. Werden beispielsweise SMS-basierte Lösungen für den Ticketerwerb eingesetzt, wird zwar eine bestehende Infrastruktur (Mobilfunknetz) für die Ticketausgabe genutzt, Flexibilität hinsichtlich Wegstreckenänderungen ist damit jedoch nicht gegeben.

Systeme auf der Basis von CICO- oder BIBO-Verfahren verlangen den Aufbau einer eigenen Infrastruktur zur automatischen Erkennung von Start- und Endpunkten einer Wegstrecke eines Untersuchungsobjekts entweder an den Übergangspunkten in das Wegenetz (z.B. Metro-Station) oder als Teil der Referenzobjekte (z.B. stationäre Raumerfassungssysteme im Fahrzeug und zugehörige mobile Komponenten beim Untersuchungsobjekt; siehe ALLFA Projekt, Dresden).

Letztgenannte Verfahren basieren auf dem abschnittsweisen Vergleich protokollierter Empfangscharakteristika funkzellenbasierter Empfangsgeräte von Untersuchungsobjekten und Referenzobjekten. Diese Charakteristika müssen simultan erfasst werden. Daraus resultieren zum einen Anforderungen an die Infrastruktur der Referenzobjekte (z.B. Verfügbarkeit von Endgeräten bei allen Referenzobjekten für alle von den Untersuchungsobjekten genutzten Funknetzen). Zudem müssen sich Referenzobjekte und Untersuchungsobjekte jeweils auf die gleiche Basisstation des Funknetzes beziehen, um vergleichbare Charakteristika zu erreichen.

Aus dem Stand der Technik (WO 00/48058) ist ein System bekannt, dass die automatische Nachverfolgung von Objekten ("Tracking"), wie beispielsweise von Lastkraftwagen ermöglicht. Das System offenbart die computergestützte Erstellung einer Karte, die den Bewegungspfad der unterschiedlichen Objekte abbilden kann.

Aufgabe der vorliegenden Erfindung ist es daher, ein Wegstreckenbestimmungsverfahren zur Verfügung zu stellen, mit welchem auf einfache, schnelle und möglichst flexible (hinsichtlich möglicher Wegstreckenänderungen und/oder Wechsel von Transportobjekten) Art und Weise die von einem Untersuchungsobjekt bei Bindung an eines oder mehrere Referenzobjekte innerhalb eines Wegenetzes, auf welchem sich das bzw. die Referenzobjekte bewegen, im Wegenetz zurückgelegte Wegstrecke bestimmt werden kann. Aufgabe ist es hierbei insbesondere, ein solches Wegstreckenbestimmungsverfahren zur Verfügung zu stellen, bei welchem das Vernetzen bereits vorhandener Infrastrukturen zu einer eigenen Infrastruktur bzw. der Aufbau einer eigenen Infrastruktur nicht notwendig ist. Aufgabe der Erfindung ist es darüberhinaus, eine zur Durchführung des Wegstreckenbestimmungsverfahrens geeignete computergestützte Wegstreckenbestimmungseinheit zur Verfügung zu stellen.

Diese Aufgabe wird durch das Wegstreckenbestimmungsverfahren gemäß Patentanspruch 1, durch die computergestützte Wegstreckenbestimmungseinheit nach Anspruch 17, sowie durch das System nach Anspruch 20 gelöst. Vorteilhafte Weiterbildungen lassen sich den jeweiligen abhängigen Ansprüchen entnehmen.

Das erfindungsgemäße Wegstreckenbestimmungsverfahren wird nachfolgend zunächst allgemein beschrieben. Dem schließen sich zwei Ausführungsbeispiele, welche konkrete Anwendungsfälle beschreiben, an.

Das erfindungsgemäße Verfahren nutzt die Verknüpfung von statischen Informationen, d.h. einem vorgegebenen Wegenetz, mit dynamisch erzeugten Informationen, den Bewegungen von Untersuchungs- und Referenzobjekten aus bestehenden Infrastrukturen, um aus einem Vergleich (engl. Matching) der erfassten Bewegungen der Untersuchungsobjekte mit den unabhängig davon bestimmten Bewegungen der Referenzobjekte die Wegstrecken der Untersuchungsobjekte zu bestimmen.

Das erfindungsgemäße Verfahren zur indirekten Wegstreckenbestimmung von Untersuchungsobjekten basiert auf dem Vergleich der Bewegungen von Referenzobjekten auf einem festgelegten Wegenetz, die extern erfasst und geeignet zur Verfügung gestellt werden, und der Ortungsinformationen zu den Untersuchungsobjekten. Die Ortungsinformationen werden über einen Ortungsmechanismus abgefragt und ausgewertet.

Das der Wegstreckenbestimmung zugrunde liegende Wegenetz ist während der Wegstreckenbestimmung fest und die Referenzobjekte bewegen sich vorteilhafterweise ausschließlich in dem Wegenetz. Die Untersuchungsobjekte können sich (insbesondere wenn sie an ein Referenzobjekt gebunden sind) auf dem Wegenetz bewegen; es ist jedoch für die Untersuchungsobjekte auch ein Verlassen des Wegenetzes möglich. Das Wegenetz hat vorteilhafterweise zusätzlich die Eigenschaft, dass ein Untersuchungsobjekt einen Weg nur an definierten Stellen, den Übergangspunkten, beginnen, beenden oder von einem Referenzobjekt zum nächsten wechseln kann. Ein Untersuchungsobjekt signalisiert dabei vorteilhafterweise explizit den Beginn des ersten Wegstreckenabschnitts auf dem Wegenetz (es kann jedoch ggf. auch bei einer aus mehreren Abschnitten bestehenden Wegstrecke der Beginn von weiteren Abschnitten signalisiert werden; vorteilhafterweise wird beim Beginn des zweiten oder weiterer Abschnitte der Wegstrecke der Übergang auf andere Referenzobjekte automatisch erkannt). Ein Wegstreckenabschnitt ist hierbei als ein Wegteil auf dem vorgegebenen Wegenetz definiert, auf dem sich das Untersuchungsobjekt und eines der Referenzobjekte parallel, also in zeitlicher und räumlicher Übereinstimmung bewegen oder bewegt haben.

Nachfolgend wird alternativ zur "Bewegung auf dem Wegenetz" auch von einer Bewegung "innerhalb des Wegenetzes" gesprochen. Hierunter wird eine Bewegung verstanden, welche sich ausschließlich auf Wegstrecken, welche vom Wegenetz umfasst werden, abspielt. Die Bewegung der Referenzobjekte werden vorteilhafterweise in Form von Wegepunkten und Zeiten angegeben, dabei werden vorteilhafterweise sowohl vergangene als auch zukünftige geplante Bewegungen angegeben. Letztere dienen der Optimierung der Ortungsabfragen der Untersuchungsobjekte.

Die Wegstreckenbestimmung erfolgt entweder zeitlich parallel zur Bewegung des Untersuchungsobjekts oder nach Abschluss der Bewegung (also wenn die Bewegung des Untersuchungsobjekts ganz aufgehört hat oder wenn das Untersuchungsobjekt das vorbestimmte Wegenetz verlassen hat) durch Auswertung der Ortungsinformationen. Im ersteren Fall kann im Rahmen der Berechnungen eine Optimierung der Ortungen durchgeführt werden, im letzteren Fall müssen die Ortungen in hinreichend engem Abstand erfolgen. Die Ortung bzw. deren Optimierung kann dabei wie folgt erfolgen: Bewegen sich ein oder mehrere Referenzobjekte von einem Übergangspunkt aus innerhalb des Wegenetzes und sind die geplanten Bewegungen bekannt (Stichwort Fahrplan, Transferzeiten/Fahrzeiten zwischen Übergangspunkten), ist daraus ableitbar, wann sich ein Referenzobjekt an dem jeweils nächsten Übergangspunkt innerhalb des Wegenetzes befinden wird. Wird zu diesen Zeitpunkten eine Ortung des Untersuchungsobjekts durchgeführt, ist aufgrund der Position des Untersuchungsobjekts eine Zuordnung zu einem Referenzobjekt möglich. Mögliche partielle parallele Bewegungen von mehreren Referenzobjekten auf einer Wegstrecke können durch mehrere Ortungen erkannt werden. Wenn zwei Referenzobjekte sich zur gleichen Zeit auf derselben Wegstrecke unterhalb der Ortungsgenauigkeit bewegen, so wird eines der Objekte ausgewählt. Eine eindeutige Identifikation des Referenzobjekts ist dann aus den Ortungsinformationen nicht möglich. Es können aber aus den semantischen Informationen zu den Referenzobjekten (z.B. Zugklasse) die ggf. notwendigen Zusatzinformationen für eine korrekte Zuordnung abgeleitet werden. Wenn hier beide Referenzobjekte die gleichen Eigenschaften haben, ist eine genaue Identifikation des Referenzobjekts in den Anwendungsszenarien nicht notwendig (z.B. ist für die Abrechnung einer Bahnfahrt die Zugklasse für die Preisberechnung ausreichend).

Als Wegenetz wird hier jedes eindeutig bestimmte Netz von Verkehrswegen bezeichnet, auf dem sich Referenz- und Untersuchungsobjekte bewegen können. Die Beschreibung dieser Wegnetze ist vorteilhafterweise in maschinenlesbarer Form möglich. Die einzelnen Strecken des Wegnetzes sind vorteilhafterweise georeferenziert. Unter Georeferenzierung versteht man die eindeutige Zuordnung von geografischen Koordinaten zu einem Punkt oder Objekt. Bei der vorliegenden Erfindung heißt das, dass jeder Punkt der Wegstrecke durch eine eindeutige Koordinate definiert ist. Damit ist eine eindeutige Abbildung der Positionen von Untersuchungsobjekten und Referenzobjekten auf Punkte des Wegesystems möglich (Georeferenzierung: Einordnen von Geoinformation, Karten, Bildern, Rasterdaten in ein Geokoordinatensystem (Koordinatenreferenzsystem) durch Zuweisen von Realweltkoordinaten).

Beispiele für derartige Netze sind das deutsche Autobahnnetz, das Netz der Deutschen Bahn oder Netze des öffentlichen Personennahverkehrs aber auch Wegenetze von Flurförderfahrzeugen in einer Fabrik.

Als Referenzobjekte werden Transportmedien bezeichnet, die sich auf dem Wegenetz bewegen. Die Bewegungen der Transportmedien auf dem Wegenetz werden vorteilhafterweise maschinenlesbar protokolliert. Dabei werden diese raum-zeitlichen Bewegungen (z.B. durch Feststellen des Aufenthaltsortes der Medien in definierten Zeitabständen) so erfasst, dass eine eindeutige Zuordnung der Medien zu einem Punkt im Wegenetz möglich ist. Die Erfassung der Bewegungen ist durch verschiedene Ortungsverfahren möglich. Satellitenortung per GPS ist genauso möglich wie die Nutzung von RFID-Transpondern an definierten Punkten des Wegenetzes.

Beispiele für Referenzobjekte sind Züge der Deutschen Bahn oder Busse und Straßenbahnen im öffentlichen Nahverkehr. Ein Bewegungsprotokoll für ein solches Referenzobjekt kann z.B. aus der Folge von Haltestationen mit zugehörigen Ankunfts- und Abfahrtzeiten bestehen. Die Kenntnis der Strecke zwischen zwei Haltestationen ermöglicht eine Interpolation von Raum-Zeit-Koordinaten für Punkte auf der Strecke zwischen den Stationen.

Die Kenntnis des geplanten Weges eines Referenzobjekts kann genutzt werden, um Kontrollortungen eines Untersuchungsobjekts auszulösen.

Als Untersuchungsobjekte werden die Objekte, die an Referenzobjekte gebunden sind oder werden können (z.B. transportiert werden) bezeichnet. Die Ortung eines Untersuchungsobjekts erfolgt indirekt, d.h. über dem Objekt zugeordnete technische Hilfsmittel. Beispiele für Untersuchungsobjekte sind Fahrgäste (Bahn, ÖPNV), Koffer oder Warenpaletten. Die Ortung dieser Objekte erfolgt über dem Objekt zugeordnete Hilfsmittel wie Mobilfunktelefone, GPS-Empfänger oder RFID-Chips.

Obwohl die Ortung prinzipiell über Sensorik, Ultraschall, Infrarot oder funkbasiert erfolgen kann, ist für das hier dargestellte Verfahren die funkbasierte Ortung über Mobilfunknetze von besonderer Bedeutung. Prinzipiell ist jedes der dort verfügbaren Ortungsverfahren (z.B. CGI -cell of global identity, AOA - Angle of Arrival, UL-TOA - Uplink Time of Arrival) für das hier beschriebene Verfahren zur Wegstreckenbestimmung verwendbar. Wesentlich ist nur, dass die Genauigkeit des jeweilig genutzten Ortungsverfahrens in Relation zum Wegenetz steht.
Bei langen Wegstrecken (z.B. Fernreisen mit der Bahn) reicht CGI aus, um eine Zuordnung von Untersuchungsobjekt und Referenzobjekt zu ermöglichen. Bei kurzen Strecken, wie sie beispielsweise im ÖPNV-Netz auftreten, sind vorteilhafterweise eher Verfahren mit höherer Ortungsgenauigkeit zu verwenden.

Beispielsweise ergibt sich die Ortungsgenauigkeit verschiedener Mobilfunk-basierter Ortungstechniken wie folgt:
CGI 150 m bis 35 km, je nach Zellengröße,
AOA 50 m bis 150 m,
UL-TOA 50 m bis 200 m,

Dem steht eine Ortungsgenauigkeit von ursprünglich 100 m und seit Mai 2000 von etwa 15 m oder auch darunter bei der Ortung mittels GPS gegenüber. In der Praxis kann die Genauigkeit auch größer sein. Im öffentlichen Personennahverkehr (ÖPNV) betragen die Haltestellenabstände von Bussen und Bahnen üblicherweise nur wenige Hundert Meter (Bsp. Stadtplanung Karlsruhe Südost: 250 m bis 600 m). In dem Fall ist eine auf CGI-basierte Ortung in den meisten Fällen nicht ausreichend. Hier ist der Einsatz von Ortungstechniken wie AOA oder UL-TOA erforderlich, um eine eindeutige Zuordnung zu ermöglichen. Bei Abständen von mehreren Kilometern zwischen Haltebahnhöfen des Regionalverkehrs oder im Fernverkehr der Deutschen Bahn ist auch CGI als ausreichend anzusehen.

Eine funkbasierte Ortung über Funknetze wie WLAN oder Bluetooth genauso wie satellitengestützte Ortung setzen voraus, dass entweder die Untersuchungsobjekte oder die Referenzobjekte oder beide mit entsprechender technischer Infrastruktur ausgestattet sind.

Die Wegstreckenbestimmung bzw. die Bestimmung der einzelnen Wegstreckenabschnitte erfolgt im erfindungsgemäßen Verfahren bevorzugt parallel zur Bewegung des Untersuchungsobjekts, d.h. wenn sich das Untersuchungsobjekt noch auf den jeweiligen Wegstreckenabschnitten bewegt. Alternativ hierzu kann jedoch auch eine Wegstreckenbestimmung nach Abschluss der Bewegung des Untersuchungsobjekts erfolgen, indem z.B. die einzelnen Kontrollortungen nachträglich ausgewertet werden. Hierbei werden die Ortungsinformationen des Untersuchungsobjekts und die Bewegungsinformationen der Referenzobjekte miteinander verglichen und es wird eine Übereinstimmung der Bewegungen des Untersuchungsobjekts mit einem der Referenzobjekte gesucht. Die Bewegungsinformationen der Referenzobjekte können hierbei ebenfalls über Ortungen ermittelt werden, es ist jedoch auch möglich, vorab bestimmte Bewegungsmuster (z.B. Fahrpläne oder ähnliches) zu verwenden.

Die Bestimmung der Übereinstimmung der Bewegungen von Untersuchungs- und Referenzobjekten kann hierbei wie folgt geschehen: Ausgangspunkt ist, die Bewegung der Referenzobjekte im Wegenetz in maschinenlesbarer Form zur Verfügung zu stellen. Vorteilhafterweise erfolgt die Erfassung der räumlichen Bewegung mit einer Genauigkeit, die eine eindeutige Zuordnung des Referenzobjekts zu Wegabschnitten des Wegenetzes zulässt. Dies kann beispielsweise über eine GPS-Ortung erreicht werden. Eine Abbildung einer solchen GPS-Position auf eine Wegstrecke kann hierbei wie in einem Auto-Navigationssystem vorgenommen werden. Eine Alternative ist die Erkennung von Markierungen entlang der Wegstrecke durch das Referenzobjekt (z.B. Lesen von RFID-Tags, Infrarot-Baken o.ä.). Die Bewegungen der Referenzobjekte können auch von den Netzmanagementsystemen der Betreiber der Wegenetze erfasst und in dem Verfahren genutzt werden. Durch die Kombination der Sollbewegungen eines Fahrplans und den Ist-Bewegungen, die der Betreiber zur Verfügung stellt, können die aktuelle und die geplante zukünftige Position der Referenzobjekte bestimmt werden (z.B. für die Optimierung der Ortung). Bei der Bestimmung der Position eines Referenzobjekts ist zu berücksichtigen, dass die Position zwar einen Punkt bezeichnet, das Referenzobjekt aber eine räumliche Ausdehnung haben kann, die deutlich über den Punkt und einen durch die Messungenauigkeit bestimmten Umkreis hinausgehen kann. Ein ICE-3 ist 200 m lang, bei der häufig vorgenommenen Kopplung zweier Züge ergibt sich eine Gesamtlänge von 400 m; damit liegt die Zuglänge deutlich über der Messgenauigkeit verschiedener Mobilfunk-basierter Verfahren zur Positionsbestimmung. Selbst ein moderner Linienbus von rund 12 m bis 18 m Länge (z.B. Mercedes Benz Citaro bzw. Citaro G) liegt über der Ortungsgenauigkeit von GPS. In diesen Fällen bezeichnet die Position des Referenzobjekts nicht nur einen Punkt der Wegstrecke sondern einen Teil eines Wegstreckenabschnitts.

Es kann nun z.B. vorausgesetzt werden, dass die Angaben zum Ortungszeitpunkt bei Untersuchungsobjekten und Referenzobjekten korrekt sind (d.h. keine falsch gehenden Uhren). Der Einfachheit kann außerdem angenommen werden, dass die Positionsangabe des Referenzobjekts sich auf das vordere Ende des Referenzobjekts (in Bewegungsrichtung gesehen) bezieht. Aus dem gleichen Grund kann angenommen werden, dass ein Untersuchungsobjekt keine größere räumliche Ausdehnung hat und aus verfahrenstechnischer Sicht als Punkt betrachtet werden kann, dessen Position sich aus der Ortung (einschließlich der mit dem jeweiligen Ortungsverfahren verbundenen Ungenauigkeit) ergibt.

Im einfachsten Fall können die Bewegungen von Untersuchungsobjekten und Referenzobjekten als übereinstimmend betrachtet werden, wenn die Position des Untersuchungsobjekts sich zu den Ortungszeitpunkten jeweils innerhalb der von dem zugeordneten Referenzobjekt angegebenen Position und der Länge des Referenzobjekts (= vom Referenzobjekt überdeckter Teilabschnitt des Wegenetzes) befindet.

In der Regel werden aber die Positionen von Untersuchungsobjekt und Referenzobjekt zumindest teilweise differieren. In diesem Fall lassen sich statistische oder stochastische Verfahren zur Ermittlung von Übereinstimmungen anwenden. Beispiele für derartige Verfahren sind Bayessche oder Kalman-Filter oder sequentielle Monte-Carlo-Methoden sowie auf diesen Verfahren basierende Weiterentwicklungen (z.B. Partikelfilter), die heute zum Tracking von Objekten bei ungenauen Messungen der Position bereits genutzt werden.

Bei der Prüfung der Übereinstimmung der Bewegungen von Untersuchungsobjekt und Referenzobjekt anhand von Bewegungsmustern kann z.B. vorausgesetzt werden, dass das Bewegungsmuster als Folge von Beschleunigungen, Fahrtzeiten, Verzögerungen und Standzeiten in Kombination mit Weginformationen vorliegt. Vorteilhafterweise liegt auch die Abdeckung des Wegenetzes durch Mobilfunkzellen als Information vor. Diese Informationen lassen sich zur Validierung der Übereinstimmung nutzen, wenn bei der Ortung des Untersuchungsobjekts über Mobilfunk-basierte Verfahren die Zelleninformation ebenfalls zur Verfügung steht. Eine Übereinstimmung kann dann angenommen werden, wenn die geortete Position des Untersuchungsobjekts mit der bzw. den Mobilfunkzellen übereinstimmt, die den Wegabschnitt überdecken, in dem sich das Referenzobjekt zum Ortungszeitpunkt gemäß Bewegungsmuster befunden hat.

In der Umkehrung lassen sich diese Informationen (Bewegungsmuster und Zellenabdeckung des Wegenetzes) zur Initiierung von Kontrollortungen nutzen. Sind beispielsweise Wegabschnitte nicht vollständig abgedeckt ("Funklöcher"), kann während des Durchquerens einer solchen Lücke eine Kontrollortung initiiert werden. Wird das Untersuchungsobjekt dabei geortet, lässt sich daraus ableiten, dass sich Untersuchungsobjekt und Referenzobjekt nicht im gleichen Wegenetz bewegen.

Als Ergebnis der Bestimmung der Übereinstimmung der Bewegungen des Untersuchungsobjekts mit den Referenzobjekten werden Wegstreckenabschnitte des Untersuchungsobjekts berechnet bzw. bestimmt, in denen sich das Untersuchungsobjekt jeweils parallel (also in räumlicher und zeitlicher Übereinstimmung) mit einem der Referenzobjekte bewegt hat.

Der Ablauf des erfindungsgemäßen Verfahrens ist dabei vorzugsweise wie folgt:
1) Das Untersuchungsobjekt signalisiert explizit seine Bindung an das Wegenetz. Dies geschieht beispielsweise dadurch, dass das Untersuchungsobjekt ein Kontrollortungssignal an eine Back-End-Anwendung, welche beispielsweise auf einem zentralen Server einer Leitzentrale installiert ist, sendet. Somit ist beim erfindungsgemäßen Verfahren gerade nicht notwendig, dass das Untersuchungsobjekt einen Kontakt mit einem Referenzobjekt aufnimmt. Mit einer solchen Signalisierung erklärt das Untersuchungsobjekt den räumlichen und zeitlichen Beginn einer intendierten Wegstreckenübereinstimmung mit einem der Referenzobjekte. Eine somit genauere Angabe des Referenzobjekts ist hierbei gerade nicht notwendig. Aufgrund einer solchen Signalisierung wird eine erste Ortung des Untersuchungsobjekts durchgeführt und der Startpunkt des Untersuchungsobjekts auf dem vorgegebenen Wegenetz wird errechnet.
2) In einem nächsten Schritt wird dasjenige Referenzobjekt identifiziert bzw. definiert, mit welchem sich das Untersuchungsobjekt auf dem gerade vorliegenden Wegstreckenabschnitt parallel bewegt: Hierzu werden aus der Menge der möglichen Referenzobjekte (welche an das vorgegebene Wegenetz gebunden sind, z.B. alle Busse des Busliniennetzes einer Großstadt) diejenigen bestimmt, die sich zum Startzeitpunkt der Bewegung des Untersuchungsobjekts (oder auch in einem definierten Zeitabschnitt nach diesem Startzeitpunkt) an dem Ort des Untersuchungsobjekts befinden. Letzteres wird beispielsweise dadurch festgestellt, indem diejenigen Referenzobjekte bestimmt werden, die sich in einem vordefinierten Umkreis um den bei der ersten Kontrollordnung festgestellten Ort des Untersuchungsobjekts befinden. Durch weitere Kontrollordnungen des Untersuchungsobjekts in definierten Zeitabständen werden dann sukzessive diejenigen Referenzobjekte aus der Menge der möglichen Referenzobjekte entfernt, welche zeitlich und/oder örtlich in ihrer Bewegung nicht mit der Bewegung des Untersuchungsobjekts übereinstimmen. Diese Entfernung erfolgt so lange, bis ein Referenzobjekt eindeutig bestimmt ist, dessen Bewegung zeitlich und örtlich mit der Bewegung des Untersuchungsobjekts übereinstimmt. Die Zeitpunkte der für das Untersuchungsobjekt durchgeführten Kontrollortungen werden hierbei vorteilhafterweise anhand von geplanten Bewegungen der Referenzobjekte bezüglich von Übergangspunkten ermittelt. Übergangspunkte sind hierbei Punkte auf dem Wegenetz, an denen ein Übergang des Untersuchungsobjekts in eines der Referenzobjekte oder von einem Referenzobjekt in ein anderes Referenzobjekt möglich sind (z.B. Haltestellen). Der Startpunkt und das eindeutig identifizierte Referenzobjekt werden dabei in die Wegstrecke (bzw. den gerade bestimmten Wegstreckenabschnitt) aufgenommen. Anhand der einzelnen Kontrollortungen wird dann festgestellt, ob die Bewegung des identifizierten Referenzobjekts und die Bewegung des Untersuchungsobjekts noch zeitlich und örtlich übereinstimmen. Sobald eine solche Übereinstimmung nicht mehr festgestellt werden kann, wird mit nachfolgendem Schritt 3) weiter verfahren.
3) Ermittlungen von Übergängen von dem Untersuchungsobjekt von einem Referenzobjekt in ein anderes Referenzobjekt: Wenn die Kontrollortungen des Untersuchungsobjekts keine Übereinstimmung der Bewegung mit dem identifizierten Referenzobjekt mehr zeigen, wird der aktuelle Wegstreckenabschnitt am letzten Übergangspunkt bezüglich des identifizierten Referenzobjekts beendet und in das Ergebnis aufgenommen. Alternativ hierzu kann der aktuelle Wegstreckenabschnitt auch am Ort der letzten Kontrollortung, welche eine Übereinstimmung der Bewegungen zeigt, erfolgen. Es wird nun festgestellt, ob das Untersuchungsobjekt gebunden an ein weiteres Referenzobjekt (welches nicht mit dem vorgenannt eindeutig identifizierten Referenzobjekt übereinstimmt) einen weiteren Wegstreckenabschnitt zurücklegt. Hierzu wird beispielsweise mit dem Übergangszeitpunkt (Zeitpunkt des Beendigens des vorbestimmten ersten Wegstreckenabschnitts) bzw. dem Zeitpunkt des Eintreffens des erstidentifizierten Referenzobjekts ein neuer Wegstreckenabschnitt begonnen, in dem die Wegstreckenberechnung mit dem oben beschriebenen Schritt 2) fortgesetzt wird. Scheitert die eindeutige Identifizierung eines weiteren Referenzobjekts wie vorstehend in Schritt 3 beschrieben, so wird mit Schritt 4) (siehe nachfolgend) fortgefahren und ein Ende der Bewegung ausgelöst.
4) Auslösen des Endes der an Referenzobjekte gebundenen Bewegung des Untersuchungsobjekts: Wenn das Untersuchungsobjekt das vorgegebene Wegenetz (beispielsweise an einem der Übergangspunkte) explizit verlässt, wird der Ort des Verlassens (beispielsweise letzter Übergangspunkt) durch eine Kontrollortung des Untersuchungsobjekts abgefragt und der Endpunkt des letzten Wegstreckenabschnitts demgemäß bestimmt. Alle die nach den vorstehenden Schritten bestimmten Wegstreckenabschnitte werden dann als die zurückgelegte Wegstrecke in eine Ergebnismenge eingetragen. Ein Verlassen des Wegenetzes kann hierbei insbesondere dadurch festgestellt werden, dass das Untersuchungsobjekt einen vordefinierten Maximalabstand zu den Wegen des Wegenetzes überschreitet. Vorteilhafterweise wird wie beschrieben der zuletzt betrachtete Übergangspunkt als Ende der Bewegung gewertet und der letzte Wegstreckenabschnitt mit diesem Übergangspunkt als Endpunkt in die Ergebnismenge eingetragen.

Wie nachfolgend beschrieben kann auch vorteilhafterweise eine Plausibilitätsprüfung der ermittelten Wegstrecke erfolgen:

Gibt es für Untersuchungsobjekte nur ein Wegenetz, in dem nur ein Referenzobjekt existiert, ist die Zuordnung eindeutig.

Bei mehreren Referenzobjekten in einem Wegenetz ist eine Zuordnung von Untersuchungsobjekten dann eindeutig möglich, wenn die Genauigkeit der Raum-Zeit-Koordinaten von Untersuchungsobjekten und Referenzobjekten eine eindeutige Zuordnung zulässt. Dies kann auch dann der Fall sein, wenn die Ortung von Untersuchungsobjekten weniger genau ist, als die Wegbeschreibung der Referenzobjekte. Dies gilt beispielsweise, wenn Untersuchungsobjekte über das Mobilfunknetz geortet und die Wege der Referenzobjekte per GPS ermittelt werden.

Kritischer ist die Ermittlung, wenn verschiedene Teil-Wegenetze eines Gesamt-Wegenetzes überlappen und sich Untersuchungsobjekte gebunden an unterschiedliche Referenzobjekte mehrerer Teil-Wegenetze bewegen können. Eine eindeutige Zuordnung von Untersuchungs- und Referenzobjekt ist nur bei einer entsprechend exakten Bestimmung der Raum-Zeit-Koordinaten sowohl der Untersuchungsobjekte als auch der unterschiedlichen Referenzobjekte möglich, die eine Trennung zwischen beiden erkennbar macht.

Beispiele dafür sind das Straßennetz und das ÖPNV-Netz als zwei Teilnetze eines Gesamtnetzes. Signalisiert beispielsweise eine Person eine Bindung an das ÖPNV-Netz, nutzt dann aber (z.B. nach Zurücklegen eines Teilwegabschnitts in einem Referenzobjekt des ÖPNV-Netzes) an Stelle des ursprünglich beabsichtigten Referenzobjekts "Straßenbahn" ein anderes Verkehrsmittel des anderen Teilnetzes (z.B. Bus eines privaten Busunternehmens), ist für das System zur Wegstreckenermittlung diese Unterscheidung nur dann möglich, wenn sich die Wege des Referenzobjekts und des gewählten Verkehrsmittels zeitlich oder räumlich ausreichend unterscheiden.

Die Vorteile des erfindungsgemäßen Verfahrens gegenüber den aus dem Stand der Technik bekannten Verfahren ergeben sich wie folgt:

Die vorteilhafte Wirkung des vorgeschlagenen Verfahrens besteht darin, dass sich ein Untersuchungsobjekt nach dem Signalisieren der Bindung an das Wegenetz mittels der dem Wegenetz zugeordneten Referenzobjekte frei bewegen kann und dabei die Wegstrecke automatisch bestimmt werden kann, ohne dass spezielle Infrastruktur an den Übergangspunkten oder in den Referenzobjekten benötigt wird.

Ein weiterer Vorteil des Verfahrens besteht darin, dass sich Untersuchungsobjekte im Wegenetz frei bewegen können (d.h. keine Vorab-Spezifikation der Strecke). Ein weiterer Vorteil besteht darin, dass keine spezielle Infrastruktur (Zugangskontrollsysteme) zur Erkennung der Bindung zwischen Untersuchungsobjekten und Referenzobjekten benötigt wird, wie es bei BIBO- oder CICO-Verfahren der Fall ist.

Insbesondere ist es mit dem erfindungsgemäßen Verfahren möglich, als Bewegungsinformationen der Referenzobjekte sowohl Informationen über die Ist-Bewegung der Referenzobjekte, als auch charakteristisches Bewegungsmuster der Referenzobjekte zu verwenden. Wenn man davon ausgehen kann, dass sich Referenzobjekte in typischen Mustern zwischen Übergangspunkten bewegen, ist z.B. eine Abbildung der georteten Bewegungen von Untersuchungsobjekten auf die typischen Bewegungsmuster der Referenzobjekte möglich.

So ist die Bewegung eines Linienbusses charakterisiert durch das Anfahren von Haltestellen, Abbiegevorgängen etc. Ähnliches gilt für Züge auf dem Schienennetz der Deutschen Bahn. Bahnhofsein- und -ausfahrten folgen genauso Regeln wie das Befahren der Strecke zwischen zwei Bahnhöfen. Da diese Verkehrsmittel einem Fahrplan folgen, handelt es sich um wiederkehrende Bewegungsmuster.

Bewegt sich ein Untersuchungsobjekt nach diesem Muster und hat zudem vorher die Bindung an das Wegenetz signalisiert, ist die Wahrscheinlichkeit, dass sich das Untersuchungsobjekt mit einem dem Wegenetz zugeordneten Referenzobjekt bewegt hat, sehr hoch.

Das vorgenannt dargestellte Wegstreckenbestimmungsverfahren (bzw. ein entsprechendes computergestütztes Wegstreckenbestimmungssystem) lässt sich für eine Vielzahl von technischen Anwendungsgebieten einsetzen: So ist es insbesondere möglich, das Verfahren bzw. das System zur wegabhängigen Tarifierung bei elektronischen Ticketing-Systemen (eTicketing) einsetzen. Es ist jedoch auch möglich, das Verfahren bzw. das System für die Warenverfolgung und die Dokumentation von Warenflüssen einzusetzen. Hierbei können die Wegstrecken zusammen mit den semantischen Informationen der Referenzobjekte, die in diesem Fall als Transporteur der Waren dienen (z.B. Container), zum Nachweis von Routen und/oder auch von Qualitätsparametern dienen (z.B. von Containerrouten und/oder zum Nachweis einer vollständigen Kühlkette bei Transport von Tiefkühlwaren).

Mit den semantischen Informationen zu den Referenzobjekten sind hier die Identität (Objekt-ID, z.B. Fahrzeugnummer) und Angaben zu Bewegungen des Referenzobjekts gemeint. Beispiele dafür sind Beschleunigung, Fahrgeschwindigkeit und Verzögerung, aber auch Informationen über Bewegungspläne (analog zu Fahrplänen im ÖPNV) oder Bewegungsmuster als Folge von Beschleunigungen, Fahrtzeiten, Verzögerungen und Standzeiten in Kombination mit Weginformationen. Bei der Verwendung Mobilfunk-basierter Ortung zur Positionsbestimmung von Untersuchungsobjekten sind auch die Informationen zur Netzabdeckung des Wegenetzes der Referenzobjekte als semantische Informationen anzusehen.

Beispiel: Der Transport eines Containers mit der Bahn von A nach B lässt sich über Start- und Endpunkt des Transports mit den zugehörigen Zeiten definieren. Daraus lassen sich die Punkte auf der Strecke interpolieren. Der Transport ist aber genauer durch das o.g. Bewegungsmuster beschrieben, wenn man davon ausgehen kann, dass der Transport nicht mit einer gleichmäßigen Geschwindigkeit über den gesamten Weg stattfindet. Weist der Container das gleiche Bewegungsmuster wie die Bahn auf, ist von einer Übereinstimmung auszugehen.

Nachfolgend werden noch zwei spezielle Ausführungsbeispiele für die Anwendung des erfindungsgemäßen Verfahrens näher erläutert.
- Figur 1: zeigt hierzu den Fall der Wegstreckenbestimmung bei der Bindung an Referenzobjekte eines U-Bahnsystems.
- Figur 2: zeigt einen Streckenausschnitt des Wegenetzes der Bundesbahn.

### Ausführungsbeispiel 1:

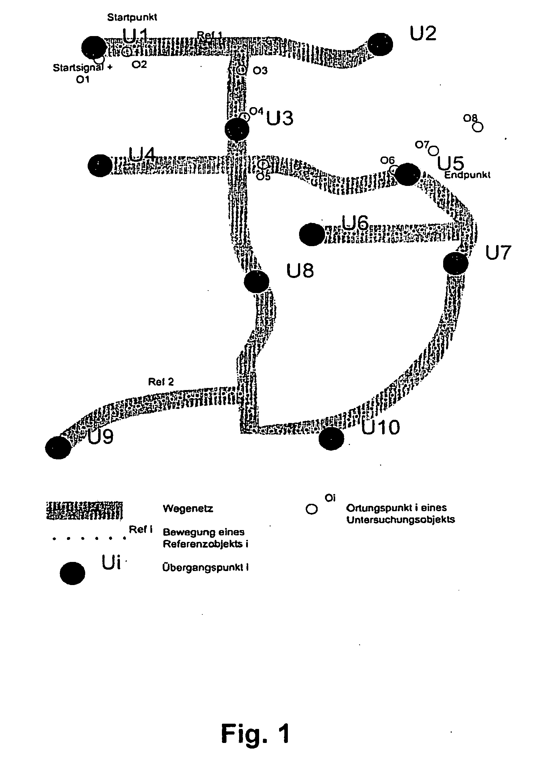

In Fig. 1 signalisiert ein Untersuchungsobjekt die Bindung an das Wegenetz. Die mit dem Startsignal verbundene Ortung O1 des Untersuchungsobjekts führt zu einer Abbildung auf U1 als intendierten Startpunkt der Wegstrecke des Untersuchungsobjekts (Übergangspunkte U1, ..., U10: U-Bahnhöfe).

Fig. 1 zeigt die Wegstrecken der Referenzobjekte "Ref 1" und "Ref 2". Da der Übergangspunkt U1 nur in der Wegstrecke von "Ref 1" enthalten ist, stellt dieses Referenzobjekt die Menge der Objekte dar, an die eine Bindung des Untersuchungsobjekts möglich ist. Der Einfachheit halber wird angenommen, dass "Ref 1" erst nach dem Startsignal den Weg von U1 nach U7 zurücklegt.

Die Ortung kann dabei wie folgt durchgeführt werden: In Fig. 1 sendet ein Untersuchungsobjekt zum Zeitpunkt t0 ein Startsignal. Es wird daraufhin in Abständen geortet. Der Verlauf der Ortung (02, 03 und 04) ergibt eine Zuordnung zu dem Referenzobjekt Refl.

Sind bei der Ankunft zum Zeitpunkt t1 am Übergangspunkt U3 diese Zuordnung und die geplante Bewegung von Ref 1 vorab bekannt, ist damit auch bekannt, wann Ref1 den Übergangspunkt U5 erreicht. Dies sei der Zeitpunkt t1+e. Für die Erkennung des Wegabschnitts U3 - U5 als Teil des Weges des betrachteten Untersuchungsobjekts reicht dann die Ortung zum Zeitpunkt t1+e für die Erkennung der Fortsetzung des Weges aus. Stimmen die Positionen von Untersuchungsobjekt und Referenzobjekt räumlich und zeitlich überein, kann von einer Fortsetzung des Weges von U3 nach U5 ausgegangen werden, ohne dass Kontrollortungen auf dem Wegabschnitt erforderlich sind.

Aus den Kontrollortungen 02 bis 06 des Untersuchungsobjekts lässt sich eine räumliche und zeitliche Übereinstimmung mit der Wegstrecke des Referenzobjekts "Ref 1" ermitteln und somit eine Zuordnung von dem Untersuchungsobjekt zu dem Referenzobjekt "Ref 1" ableiten.

Die Kontrollortung 07 des Untersuchungsobjekts liegt erkennbar außerhalb des Wegenetzes (Überschreitung des vorgegebenen Maximalabstands zum Wegenetz). Damit wird U5 als Endpunkt der Wegstrecke des Untersuchungsobjekts identifiziert.

Die Kontrollortung 08 liegt ebenfalls außerhalb des Wegenetzes und weist so darauf hin, dass kein Übergang zu einem anderen Referenzobjekt vorliegt. Damit ist die Wegstreckenermittlung für das Untersuchungsobjekt abgeschlossen.

### Ausführungsbeispiel 2: eTicketing im Bahnverkehr

Der Kunde (Untersuchungsobjekt) löst über eine Aktion per Mobiltelefon den Erwerb des eTickets für ein von ihm gewähltes Transportmedium (z.B. Buslinie 123, I-CE512) aus. Damit verbunden ist seine Ortung (Funkzellenortung). Die Position wird geografisch auf die Startstation abgebildet. Der Nutzer erhält vom eTicketing-System ein entsprechendes eTicket, das vom Betreiber einfach kontrolliert werden kann und gleichzeitig Schutz gegen Missbrauch bietet.

Die Nutzung der Vorabkenntnis des Streckenverlaufs und des Ist-Verkehrs ermöglichen ein Vorab-Mapping der Nutzerposition auf die Strecke und das sich dort zum Ortungszeitpunkt befindliche Transportmedium. Aus den Fahrtzeiten zwischen den einzelnen Stationen (Übergangspunkte; nur hier Wechsel des Referenzobjekts möglich) ergeben sich die erforderliche Ortungshäufigkeit und Ortungszeitpunkte für nachfolgende Ortungen.

Der Abgleich mit den Ist-Fahrtzeiten des Verkehrmittels ermöglicht die Entscheidung über den Ausstiegspunkt des Kunden.

Der Vorteil dieser Lösung besteht darin, dass die Bahn sich auf das vorhandene Mobilfunknetz als Infrastruktur abstützen kann. Eine Ausstattung von Zügen mit spezieller Infrastruktur für das eTicketing ist nicht erforderlich. Die Investitionen beschränken sich auf die Realisierung des Ticketing-Systems als Backend-Lösung. Das Untersuchungsobjekt muss mit den Referenzobjekten keinerlei Kontakt aufnehmen; es können für das Untersuchungsobjekt und die Referenzobjekte separate, nebeneinander existierende Ortungsnetze verwendet werden, die durch den Vergleichsschritt des erfindungsgemäßen Verfahrens zusammengeführt werden.

Voraussetzungen:
- Der Kunde benötigt ein Mobiltelefon mit SMS/MMS-Funktionalität.
- Der Ticketerwerb erfolgt per Anruf, SMS oder WAP/Web (siehe myHandyTicket.de).
- Die Ortung des Kunden erfolgt über eine Netzbasierte Ortung (z.B. Zellenbasierte Ortung beim Mobilfunknetz) .
- Der Verkehrsbetreiber erzeugt ein digitales, fälschungssicheres eTicket und sendet es an den Kunden.
- Der Streckenverlauf der Verkehrsmittel liegt als georeferenzierte digitale Karte vor. Die Abdeckung des Streckenverlaufs durch die vorhandenen Mobilfunknetze wird ebenfalls als bekannt vorausgesetzt.
- Der Verkehrsbetreiber verfügt über den Ist-Zustand des Verkehrs und protokolliert diesen (heutige ÖPNV-Leitsysteme bieten diese Funktionalität, siehe Hamburger Verkehrsverbund (HVV)).
- Der Betreiber protokolliert die Ortungen des Kunden zwischen Start- und Zielstation.

Die Erkennung des Beginns der Wegstrecke eines Untersuchungsobjekts (z.B. Fahrgast, Container) besteht in einem expliziten Signal des Untersuchungsobjekts an ein Backend-System (also gerade nicht an ein Referenzobjekt). Technisch kann dieses Signal beispielsweise als Anruf einer Servicenummer, als SMS oder als Anklicken eines Buttons einer mobilen Web/WAP-Anwendung realisiert sein. Organisatorisch kann die Authentisierung des Untersuchungsobjekts sichergestellt werden (z.B. über Registrierung oder die Übermittlung einer Kennung). Das Signal wird direkt mit einer Ortung (z.B. Ermittlung der Cell-ID im vom Fahrgast genutzten Mobilfunknetz) verknüpft. Die dabei ermittelte Position lässt sich, ggf. mit Hilfe von Transformationsdiensten (Gazetteers), automatisch auf Orte des Wegenetzes (z.B. ÖPNV oder Bahn) abbilden. Auf diese Weise lässt sich ermitteln, wo das Untersuchungsobjekt seinen Weg beginnt.

Erkennung der Wegstrecke: Wird mit dem Signalisieren des Wegbeginns ein Tracking des Untersuchungsobjekts gestartet, lässt sich aus der Verknüpfung von statischen Wegenetzinformationen mit dem realen Weg der Referenzobjekte und den Positionsinformationen des Untersuchungsobjekts ermitteln, welchen Weg er mit welchem Referenzobjekt zurückgelegt hat. Ist die Bindung des Untersuchungsobjekts an ein Referenzobjekt bekannt, kann die Kenntnis des geplanten Weges des Referenzobjekts genutzt werden, um Kontrollortungen des Untersuchungsobjekts auszulösen. Bei mittleren und langen Wegstrecken ist sichergestellt, dass auch eine grobgranulare Ortung (z.B. über die Ermittlung des Roamings in Funkzellen eines Mobilfunknetzes) für die Wegerkennung ausreicht. Bei kurzen Wegstrecken bewegt sich das Untersuchungsobjekt möglicherweise nur innerhalb einer Funkzelle. Dann sind genauere Ortungsverfahren als die Ortung der Funkzelle (CGI-Verfahren) erforderlich, um die Wegstrecke zu bestimmen.

Erkennung der Beendigung einer Fahrt: Für die Erkennung des Endes einer Wegstrecke gelten analog zur Erkennung des Beginns fast die gleichen Aussagen. Getout-Verfahren erfordern infrastrukturelle Maßnahmen, einfacher lässt sich die Erkennung über explizite Signale des Untersuchungsobjekts realisieren. Im Fernreiseverkehr ist auch eine automatische Erkennung des Fahrtendes möglich, wenn das Untersuchungsobjekt beim Tracking außerhalb der Station (z.B. Bahnhof, Flughafen) geortet wird.

### Beispielszenarien im Anwendungsbeispiel 2:

### a) Fernverkehr Dortmund - Berlin:

Kunde A fährt mit dem ICE 543 von Dortmund nach Berlin. Der Kunde trifft um 7:40 Uhr am Dortmunder Hbf ein. Er ist ETIX-Kunde der DBAG und erwirbt sein eTicket mit einer Service-SMS an den Ticketservice, die die Zugkennung "ICE 543" enthält. Zur Bestätigung erhält er einen 2D-Barcode als eTicket übermittelt.

Der Zug fährt um 7:49 Uhr los. Die planmäßigen Zwischenhalte erfolgen um 8:07 Uhr in Hamm, 8:35 Uhr in Bielefeld, 9:28 Uhr in Hannover und um 10:26 Uhr in Berlin-Spandau, um 11:06 Uhr ist das Ziel Berlin Hbf erreicht. Bei planmäßigem Reiseverlauf reicht es somit aus, den Kunden jeweils kurz nach der Abfahrt an den Stationen zu orten, um entscheiden zu können ob er sich noch im Zug befindet oder ausgestiegen ist. Der Abgleich mit dem Ist-Fahrplan liefert ggf. Korrekturwerte für den Zeitpunkt der nächsten Ortung.

Am Zielort signalisiert der Kunde mit einer entsprechenden Service-SMS das erreichen des Ziels. Verlässt der Kunde den Zug, ohne das Reiseende per SMS zu signalisieren, ergibt die Ortung nach der Abfahrt des Zuges von der Haltestation und dem Abgleich mit dem Ist-Fahrplan, dass der Kunde nicht mehr im Zug ist. Somit erkennt das Ticketing-System auch ohne Kundensignal das Erreichen des Fahrtziels und kann das eTicket des Kunden entwerten.

Der Zugschaffner kann anhand des Barcodes auf der Fahrt erkennen, dass der Kunde in Dortmund zugestiegen ist. Bei der Kontrolle kann eine entsprechende Kontrollmitteilung vom Schaffner an das Ticketing-System übertragen werden.

Im Idealfall initiiert der Kunde das Ticketing rechtzeitig vor Fahrtantritt und signalisiert das Fahrtende korrekt. Die Verfügbarkeit des Mobilfunknetzes an Bahnhöfen sollte grundsätzlich gegeben sein. Die Ortung auf Funkzellenbasis reicht hinsichtlich der Genauigkeit für den Fernverkehr aus. Die Haltebahnhöfe liegen definitiv in unterschiedlichen Funkzellen. Damit ist eine eindeutige Zuordnung möglich. Die Zuordnung von Funkzellen auf der Strecke sollte ebenfalls problemlos sein.

Ein Problem wäre der Nachweis, wenn der Kunde an einer Station den Zug verlässt, dieses nicht signalisiert und mit einem anderen Verkehrsmittel zur gleichen Zeit wie der Zug in der Funkzelle ist, in der die Ortung stattfindet. Das wäre bspw. der Fall, wenn eine Straße parallel zur Bahn verläuft und der Kunde von der Bahn auf ein Auto umsteigt. Für das Ticketing ergibt sich aber nur dann ein Problem, wenn der Kunde dann auch zeitgleich mit dem Zug am nächsten Bahnhof ankommt. Dann ist für das Ticketing-System nicht unterscheidbar, mit welchem Verkehrsmittel sich der Kunde bewegt hat. Für den Fernverkehr ist dies aber eher ein theoretisches Problem.

Falls der Kunde erst nach Fahrtantritt das Ticket erwirbt, legt das System den letzten Haltepunkt als Einstieg fest. Missbrauch ist dann möglich, wenn der Erwerb erst unmittelbar vor dem Erreichen des nächsten Haltepunktes erfolgt und die Transaktion bis zum Halt dauert. Die Ortung würde möglicherweise erst beim Halt erfolgen und so die Strecke zwischen tatsächlichem Einstieg und georteter Station nicht gerechnet. Ein analoger Missbrauch ist aber auch schon bei bestehenden Systemen möglich (z.B. wenn sich ein Fahrgast erst einige Stationen nach dem Einstieg beim Schaffner zum Ticketkauf meldet). Als Berechnungsgrundlage muss hier der Sendezeitpunkt der SMS dienen. Ein Problem kann dann nur noch in der Ungenauigkeit der Uhren bestehen.

Ein weiteres Problem kann die verzögerte Übertragung der SMS vom Kunden zum Ticketing-System verursachen. Hier hat der Kunde allerdings die Möglichkeit, das rechtzeitige Senden der SMS nachzuweisen. Bei einer Kontrolle kann der Zugschaffner eine entsprechende Information an das Ticket des Kunden auf der Systemseite übermitteln.

### b) Nahverkehr Dortmund Hbf - Recklinghausen Hbf

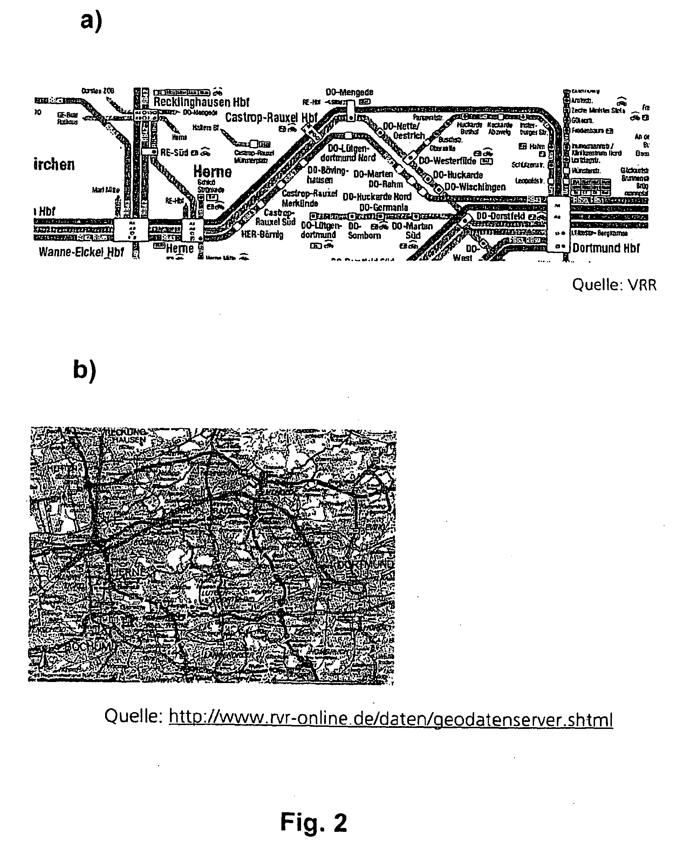

Kunde B fährt abends mit dem Nahverkehr der DBAG von Dortmund Hbf nach Recklinghausen Hbf. Die Fahrt beginnt um 22:03 Uhr in Dortmund. Um 22:23 erreicht der RE3 Wanne-Eickel Hbf. Dort muss Kunde B umsteigen in den RE2, der um 22:29 Uhr abfährt und um 22:35 Uhr in Recklinghausen ankommt (vergleiche Fig. 2a).

Wie der Kartenausschnitt in Fig. 2 andeutet, liegen die Stationen Dortmund Hbf, Dortmund-Mengede, Castrop-Rauxel Hbf, Herne, Wanne-Eickel Hbf und Recklinghausen Hbf weit genug auseinander, um Wechsel der Funkzellen zu implizieren. Die Fahrtzeit zwischen jeweils zwei Stationen beträgt 4 bis 5 Minuten. Die Umsteigezeit in Wanne-Eickel beträgt 6 Minuten.

Der Vergleich der Bahnstrecke (dicke Linie in Fig. 2b)) mit möglichen PKW-Fahrtrouten zeigt, dass es praktisch nicht möglich ist, mit dem PKW die gleichen Stationen in der gleichen Zeit zu erreichen.

Die eigentliche Herausforderung in diesem Beispiel liegt in dem automatischen Erkennen des Umstiegs. Das Tracking der Kundenpositionen von Dortmund nach Wanne-Eickel Hbf ergibt, dass der Kunde zu den fahrplanmäßigen Zeiten in den Funkzellen der jeweiligen Bahnhöfe geortet wird. Wäre der Kunde noch im Zug, müsste er um 22:28 Uhr in Gelsenkirchen geortet werden. Eine entsprechende Ortung weist ihn noch in Wanne-Eickel aus. Der Abfahrtsplan von Wanne-Eickel zeigt, dass die nächsten Reisemöglichkeiten um 22:29 Uhr bestehen: RE2 Richtung Mönchengladbach trifft um 22:33 Uhr in Gelsenkirchen ein und RE2 Richtung Haltern hat seinen nächsten Halt um 22:35 Uhr in Recklinghausen. Eine Ortung um 22:33 Uhr in Gelsenkirchen würde auf den Umstieg in RE2 Richtung Mönchengladbach hinweisen, die tatsächliche Ortung in Recklinghausen weist auf den Umstieg in RE2 Richtung Haltern hin.

## Patentansprüche

1. Wegstreckenbestimmungsverfahren zur Bestimmung der von einem Untersuchungsobjekt auf einem vorbestimmten Wegenetz, auf welchem sich mindestens ein Referenzobjekt bewegt und/oder bewegt hat, zurückgelegten Wegstrecke,
wobei räumlich-zeitliche Ortungsinformationen des Untersuchungsobjektes bestimmt werden, indem in zeitlichen Abständen mehrere räumliche Kontrollortungen des Untersuchungsobjektes durchgeführt werden,
wobei mindestens ein Wegstreckenabschnitt als ein Wegteil auf dem vorbestimmten Wegenetz bestimmt wird, auf dem sich das Untersuchungsobjekt und eines der sich auf dem Wegenetz bewegenden Referenzobjekte räumlich und zeitlich übereinstimmend bewegen und/oder bewegt haben, indem die Ortungsinformationen mit räumlichzeitlichen Bewegungsinformationen von Referenzobjekten, welche sich auf dem Wegenetz bewegen und/oder bewegt haben, verglichen werden, und
wobei die so bestimmten Wegstreckenabschnitte die zurückgelegte Wegstrecke ergeben.

2. Verfahren nach dem vorhergehenden Anspruch, wobei
sich mindestens eines der Referenzobjekte ausschließlich auf dem vorbestimmten Wegenetz bewegt.

3. Verfahren nach einem der vorhergehenden Ansprüche,
wobei
der Wegstreckenabschnitt zeitlich parallel zur Bewegung des Untersuchungsobjektes bestimmt wird oder der Wegstreckenabschnitt bestimmt wird, nachdem das Untersuchungsobjekt seine Bewegung abgeschlossen hat.

4. Verfahren nach einem der vorhergehenden Ansprüche,
wobei
die Bewegungsinformationen mindestens eines Referenzobjektes bestimmt werden, indem in zeitlichen Abständen mehrere räumliche Kontrollortungen des Referenzobjektes durchgeführt werden und/oder die Bewegungsinformationen mindestens eines Referenzobjektes bestimmt werden, indem vorbestimmte, räumlich-zeitliche Bewegungsmuster verwendet werden.

5. Verfahren nach einem der vorhergehenden Ansprüche,
wobei
vorbestimmte, räumlich-zeitliche Bewegungsmuster mindestens eines Referenzobjektes verwendet werden, um mindestens eine der Kontrollortungen des Untersuchungsobjektes auszulösen.

6. Verfahren nach einem der vorhergehenden Ansprüche,
wobei mindestens einer der Wegstreckenabschnitte, insbesondere der erste Wegstreckenabschnitt der zurückgelegten Wegstrecke, bestimmt wird,
a) indem eine erste Kontrollortung des Untersuchungsobjekts durchgeführt und/oder ausgewertet wird und anhand dieser Kontrollortung ein Startpunkt des Wegstreckenabschnittes auf dem Wegenetz bestimmt wird,
b) indem weitere Kontrollortungen solange durchgeführt und/oder ausgewertet werden, bis sich aus den sich auf dem Wegenetz bewegenden Referenzobjekten genau ein Referenzobjekt identifizieren lässt, mit welchem sich das Untersuchungsobjekt räumlich und zeitlich übereinstimmend bewegt und/oder bewegt hat und
c) indem weitere Kontrollortungen solange durchgeführt und/oder ausgewertet werden, bis eine dieser Kontrollortungen, nämlich die letzte Kontrollortung, ergibt, dass sich das Untersuchungsobjekt und das identifizierte Referenzobjekt nicht mehr räumlich und zeitlich übereinstimmend bewegen und/oder bewegt haben, wobei anhand der letzten Kontrollortung ein Endpunkt des Wegstreckenabschnitts auf dem Wegenetz bestimmt wird.

7. Verfahren nach dem vorhergehenden Anspruch,
wobei
die erste Kontrollortung durch ein Signal des Untersuchungsobjektes an eine Backend-Anwendung, insbesondere an eine auf einem zentralen Serversystem laufende Backend-Anwendung, ausgelöst wird.

8. Verfahren nach dem vorhergehenden Anspruch,
wobei
eine Authentifizierung des Untersuchungsobjekts bei der Backend-Anwendung, durchgeführt wird.

9. Verfahren nach einem der vorhergehenden Ansprüche,
wobei
ein erster Wegstreckenabschnitt bestimmt wird, auf dem sich das Untersuchungsobjekt räumlich und zeitlich übereinstimmend mit einem ersten Referenzobjekt bewegt und/oder bewegt hat, und
nach Bestimmen des Endes des ersten Wegstreckenabschnitts festgestellt wird, ob sich das Untersuchungsobjekt räumlich und zeitlich übereinstimmend mit mindestens einem weiteren Referenzobjekt bewegt und/oder bewegt hat, wobei falls letzteres der Fall ist, mindestens ein weiterer Wegstreckenabschnitt bestimmt wird.

10. Verfahren nach einem der vorhergehenden Ansprüche,
wobei
solange weitere Wegstreckenabschnitte bestimmt werden bis anhand einer Ortungsinformation und/oder eines Signals des Untersuchungsobjekts festgestellt wird, dass das Untersuchungsobjekt das Wegenetz verlässt oder verlassen hat.

11. Verfahren nach einem der beiden vorhergehenden Ansprüche,
wobei jeder Wegstreckenabschnitt gemäß einem der Ansprüche 6 bis 8 bestimmt wird.

12. Verfahren nach einem der vorhergehenden Ansprüche,
wobei
das Wegenetz und/oder die Bewegungen mindestens eines der Referenzobjekte so ausgebildet sind, dass das Untersuchungsobjekt mindestens einen der Wegstreckenabschnitte nur an vorbestimmten Stellen des Wegenetzes, die als Übergangspunkte bezeichnet werden, beginnen und/oder beenden kann.

13. Verfahren nach einem der vorhergehenden Ansprüche,
wobei sich
mehrere verschiedene Referenzobjekte auf dem Wegenetz bewegen.

14. Verfahren nach einem der vorhergehenden Ansprüche,
wobei
das Wegenetz zumindest teilweise georeferenziert ist.

15. Verfahren nach einem der vorhergehenden Ansprüche,
wobei
die Kontrollortungen des Untersuchungsobjekts und/oder des Referenzobjekts mittels Satellitenortung über GPS, mittels RFID-Transpondern, mittels funkbasierter Systeme, insbesondere mittels funkbasierter Ortung über ein zellenbasiertes Mobilfunknetz, mittels Ultraschallsignalen und/oder mittels Infrarotsignalen erfolgen.

16. Verfahren nach einem der vorhergehenden Ansprüche und nach Anspruch 4,
wobei
die Kontrollortungen des Referenzobjekts eine geringere Ortsauflösung aufweisen als die Kontrollortungen des Untersuchungsobjekts oder dass die Kontrollortungen des Untersuchungsobjekts eine geringere Ortsauflösung aufweisen als die Kontrollortungen des Referenzobjekts.

17. Computergestützte Wegstreckenbestimmungseinheit zur Bestimmung der von einem Untersuchungsobjekt auf einem vorbestimmten Wegenetz, auf welchem sich mindestens ein Referenzobjekt bewegt und/oder bewegt hat, zurückgelegten Wegstrecke, mit der
in zeitlichen Abständen mehrere von dem Untersuchungsobjekt zu dessen räumlicher Kontrollortung ausgesandte Signale empfangbar sind,
mit der aus den empfangenen Kontrollortungssignalen räumlich-zeitliche Ortungsinformationen des Untersuchungsobjektes bestimmbar sind,
mit der mindestens ein Wegstreckenabschnitt als ein Wegteil auf dem vorbestimmten Wegenetz bestimmbar ist, auf dem sich das Untersuchungsobjekt und eines der sich auf dem Wegenetz bewegenden Referenzobjekte räumlich und zeitlich übereinstimmend bewegen und/oder bewegt haben, indem die Ortungsinformationen mit räumlichzeitlichen Bewegungsinformationen von Referenzobjekten, welche sich auf dem Wegenetz bewegen und/oder bewegt haben, verglichen werden, und mit der die so bestimmten Wegstreckenabschnitte als die zurückgelegte Wegstrecke in eine Ergebnismenge eintragbar sind.

18. Computergestützte Wegstreckenbestimmungseinheit nach dem vorhergehenden Anspruch,
wobei
die Einheit zur Durchführung eines Verfahrens nach einem der vorhergehenden Verfahrensansprüche ausgebildet ist.

19. Computergestützte Wegstreckenbestimmungseinheit nach einem der beiden vorhergehenden Ansprüche,
wobei
eine Empfangseinheit zum Empfang der Signale und ein mit der Empfangseinheit verbundenes Serversystem mit Backend-Anwendung zur Bestimmung der Ortungsinformationen und des mindestens einen wegstreckenabschnitts, vorgesehen sind.

20. System aus einer computergestützten Wegstreckenbestimmungseinheit nach einem der drei vorhergehenden Ansprüche und einer mit einem Untersuchungsobjekt verbindbaren und/oder verbundenen Kontrollortungssignal-Sendeeinheit.

21. System nach dem vorhergehenden Anspruch,
mit einem
Mobilfunkgerät als Kontrollortungssignal-Sendeeinheit.

22. Verwendung eines Wegstreckenbestimmungsverfahrens, einer computergestützten Wegstreckenbestimmungseinheit und/oder eines Systems nach einem der vorhergehenden Ansprüche für die Berechnung von wegabhängigen Transportleistungen, insbesondere im Bereich des eTicketings, für den Nachweis der Beförderung des Untersuchungsobjekts, zur Bestimmung der von Personen auf einem Wegenetz, insbesondere auf einem Buslinien- und/oder Bahnlinien- und/oder Fluglinienwegenetz, zurückgelegten Wegstrecke, zur Bestimmung der von Lasttransporteinheiten, insbesondere Gepäckstücken, Flurförderfahrzeugen oder Containern, auf einem vorbestimmten Transportwegenetz, insbesondere einem Gepäcktransportwegenetz, einem Flurförderwegenetz innerhalb einer Fabrik oder einem Containertransportwegenetz, zurückgelegten Wegstrecke.

## Claims

1. Distance determination method for determining the distance covered by an examination object on a predetermined route network on which at least one reference object is moving and/or has moved, wherein spatiotemporal locating information for the examination object is determined by performing a plurality of spatial control locating operations on the examination object at intervals of time, wherein at least one distance section is determined as a route portion on the predetermined route network on which the examination object and one of the reference objects moving on the route network are moving and/or have moved in spatial and temporal concurrence by comparing the locating information with spatiotemporal movement information from reference objects which are moving and/or have moved on the route network, and wherein the distance sections determined in this manner provide the distance covered.

2. Method according to the preceding claim,
wherein
at least one of the reference objects moves exclusively on the predetermined route network.

3. Method according to one of the preceding claims,
wherein
the distance section is determined at a time parallel to the movement of the examination object, or the distance section is determined after the examination object has completed its movement.

4. Method according to one of the preceding claims,
wherein
the movement information for at least one reference object is determined by performing a plurality of spatial control locating operations on the reference object at intervals of time, and/or the movement information for at least one reference object is determined by using predetermined, spatiotemporal movement patterns.

5. Method according to one of the preceding claims,
wherein
predetermined, spatiotemporal movement patterns for at least one reference object are used in order to initiate at least one of the control locating operations on the examination object.

6. Method according to one of the preceding claims,
wherein
at least one of the distance sections, particularly the first distance section of the covered distance, is determined
a) by performing and/or evaluating a first control locating operation on the examination object and using said control locating operation to determine a starting point for the distance section on the route network,
b) by performing and/or evaluating further control locating operations until precisely one reference object from the reference objects moving on the route network can be identified with which the examination object is moving and/or has moved in spatial and temporal concurrence, and
c) by performing and/or evaluating further control locating operations until one of said control locating operations, namely the last control locating operation, reveals that the examination object and the identified reference object are no longer moving and/or have no longer moved in spatial and temporal concurrence, the last control locating operation being used to determine an end point for the distance section on the route network.

7. Method according to the preceding claim,
wherein
the first control locating operation is initiated by a signal from the examination object to a backend application, particularly to a backend application running on a central server system.

8. Method according to the preceding claim,
wherein
the examination object is authenticated with the backend application.

9. Method according to one of the preceding claims,
wherein
a first distance section is determined on which the examination object is moving and/or has moved in spatial and temporal concurrence with a first reference object, and determination of the end of the first distance section is followed by establishment of whether the examination object is moving and/or has moved in spatial and temporal concurrence with at least one further reference object, wherein if the latter is the case then at least one further distance section is determined.

10. Method according to one of the preceding claims,
wherein
further distance sections are determined until a piece of locating information and/or a signal from the examination object is/are used to establish that the examination object is leaving or has left the route network.

11. Method according to one of the two preceding claims,
wherein
each distance section is determined in accordance with one of Claims 6 to 8.

12. Method according to one of the preceding claims,
wherein
the route network and/or the movements of at least one of the reference objects is/are designed such that the examination object can start and/or end at least one of the distance sections only at predetermined points on the route network, which are called transition points.

13. Method according to one of the preceding claims,
wherein
a plurality of different reference objects move on the route network.

14. Method according to one of the preceding claims,
wherein
the route network is at least partially georeferenced.

15. Method according to one of the preceding claims,
wherein
the control locating operations on the examination object and/or on the reference object are effected by means of satellite location using GPS, by means of RFID transponders, by means of radio-based systems, particularly by means of radio-based location using a cell-based mobile radio network, by means of ultrasonic signals and/or by means of infrared signals.

16. Method according to one of the preceding claims and according to Claim 4,
wherein
the control locating operations on the reference object have a lower spatial resolution than the control locating operations on the examination object or wherein the control locating operations on the examination object have a lower spatial resolution than the control locating operations on the reference object.

17. Computer-aided distance determination unit for determining the distance covered by an examination object on a predetermined route network on which at least one reference object is moving and/or has moved,
which can be used to receive, at intervals of time, a plurality of signals emitted by the examination object for the spatial control locating operation thereon,
which can be used to determine spatiotemporal locating information for the examination object from the received control locating signals,
which can be used to determine at least one distance section as a route portion on the predetermined route network on which the examination object and one of the reference objects moving on the route network are moving and/or have moved in spatial and temporal concurrence by comparing the locating information with spatiotemporal movement information from reference objects which are moving and/or have moved on the route network, and
which can be used to enter the thus determined distance sections as the covered distance into a set of results.

18. Computer-aided distance determination unit according to the preceding claim,
wherein
the unit is designed to carry out a method according to one of the preceding method claims.

19. Computer-aided distance determination unit according to one of the two preceding claims, wherein
a reception unit for receiving the signals and a server system, connected to the reception unit, with a backend application for determining the locating information and the at least one distance section are provided.

20. System comprising a computer-aided distance determination unit according to one of the three preceding claims and comprising a control locating signal transmission unit which can be connected and/or is connected to an examination object.

21. System according to the preceding claim,
having
a mobile radio as control locating signal transmission unit.

22. Use of a distance determination method, a computer-aided distance determination unit and/or a system according to one of the preceding claims for the calculation of route-dependent transport capacities, particularly in the area of eTicketing, for verifying the carriage of the examination object, for determining the distance covered by people on a route network, particularly on a bus and/or rail and/or air route network, for determining the distance covered by load transportation units, particularly luggage items, industrial trucks or containers, on a predetermined transport route network, particularly a luggage transport route network, an industrial route network within a factory or a container transport route network.

## Revendications

1. Procédé de détermination de distance parcourue pour déterminer la distance parcourue par un sujet étudié sur un réseau routier prédéterminé, sur lequel au moins un sujet de référence se déplace et/ou s'est déplacé,
dans lequel on détermine des informations de localisation spatio-temporelle quant au sujet étudié en réalisant par intervalles de temps donnés plusieurs localisations de contrôle spatiales du sujet étudié,
dans lequel on détermine au moins un segment de distance parcourue comme partie de route sur le réseau routier prédéterminé, sur lequel le sujet étudié et un des sujets de référence qui se déplace sur le réseau routier effectuent et/ou ont effectué des mouvements respectifs correspondant l'un à l'autre sur les plans spatial et temporel, en comparant les informations de localisation à des informations concernant le mouvement spatio-temporel de sujets de référence, qui se déplacent et/ou se sont déplacés sur le réseau routier, et
dans lequel les segments de distance parcourue ainsi déterminés donnent la distance parcourue.

2. Procédé selon la revendication précédente, dans lequel au moins un des sujets de référence se déplace exclusivement sur le réseau routier prédéterminé.

3. Procédé selon l'une quelconque des revendications précédentes, dans lequel le segment de distance parcourue est déterminé simultanément avec le mouvement du sujet étudié ou le segment de distance parcourue est déterminé après que le sujet étudié a terminé son mouvement.

4. Procédé selon l'une quelconque des revendications précédentes, dans lequel on détermine les informations quant au mouvement d'au moins un sujet de référence en réalisant par intervalles de temps donnés plusieurs localisations de contrôle spatiales du sujet de référence et/ou on détermine les informations quant au mouvement d'au moins un sujet de référence en utilisant des modèles de mouvements spatio-temporels prédéterminés.

5. Procédé selon l'une quelconque des revendications précédentes, dans lequel des modèles de mouvement spatio-temporel prédéterminés d'au moins un sujet de référence sont utilisés pour déclencher au moins une des localisations de contrôle du sujet étudié.

6. Procédé selon l'une quelconque des revendications précédentes, dans lequel on détermine au moins l'un des segments de distance parcourue, en particulier le premier segment de la distance parcourue
a) en réalisant et/ou en exploitant une première localisation de contrôle du sujet étudié et en déterminant, sur la base de cette localisation de contrôle, un point de départ du segment de distance parcourue sur le réseau routier,
b) en réalisant et/ou en exploitant d'autres localisations de contrôle jusqu'à ce que l'on puisse identifier, parmi les sujets de référence se déplaçant sur le réseau routier, exactement un sujet de référence, dont le mouvement correspond, sur les plans spatial et temporel, à celui du sujet étudié.
c) en réalisant et/ou en exploitant d'autres localisations de contrôle jusqu'à ce que d'une de ces localisations de contrôle, à savoir de la dernière localisation de contrôle, résulte que le mouvement que le sujet étudié effectue et/ou a effectué ne correspond plus à celui que le sujet de référence identifié effectue et/ou a effectué, un point de terminaison du segment de distance parcourue sur le réseau routier étant alors déterminé sur la base de cette dernière localisation de contrôle.

7. Procédé selon la revendication précédente, dans lequel la première localisation de contrôle est déclenchée par un signal du sujet étudié vers une application back-end, en particulier vers une application back-end ouverte sur un système de serveur central.

8. Procédé selon la revendication précédente, dans lequel une authentification du sujet étudié est réalisée lors de l'application back-end

9. Procédé selon l'une quelconque des revendications précédentes, dans lequel on détermine un premier segment de distance parcourue, sur lequel le mouvement que le sujet étudié effectue et/ou a effectué correspond, sur les plans spatial et temporel, à celui d'un premier sujet de référence et, après détermination de la fin du premier segment de distance parcourue, on établit si le mouvement que le sujet étudié effectue et/ou a effectué correspond, sur les plans spatial et temporel, à celui d'au moins un autre sujet de référence, et dans ce dernier cas, on détermine alors au moins un autre segment de distance parcourue.

10. Procédé selon l'une quelconque des revendications précédentes, dans lequel on détermine d'autres segments de distance parcourue jusqu'à ce que l'on constate, sur la base d'une information de localisation et/ou d'un signal du sujet étudié que le sujet étudié quitte ou a quitté le réseau routier.

11. Procédé selon l'une quelconque des deux revendications précédentes, dans lequel chaque segment de distance parcourue est déterminé selon l'une quelconque des revendications 6 à 8.

12. Procédé selon l'une quelconque des revendications précédentes, dans lequel le réseau routier et/ou les mouvements d'au moins un des sujets de référence se présentent de telle sorte que le sujet étudié ne peut démarrer et/ou terminer au moins un des segments de distance parcourue qu'à des points prédéterminés du réseau routier, qui sont nommés points de transition.

13. Procédé selon l'une quelconque des revendications précédentes, dans lequel plusieurs sujets de référence différents se déplacent sur le réseau routier.

14. Procédé selon l'une quelconque des revendications précédentes, dans lequel le réseau routier est géoréférencé au moins en partie.

15. Procédé selon l'une quelconque des revendications précédentes, dans lequel les localisations de contrôle du sujet étudié et/ou du sujet de référence sont effectuées par localisation satellite moyennant le système GPS, au moyen de transpondeurs RFID, au moyen de systèmes radio, en particulier par localisation radio via un réseau radio mobile cellulaire, au moyen de signaux ultra-sons et/ou au moyen de signaux infrarouges.

16. Procédé selon l'une quelconque des revendications précédentes et selon la revendication 4, dans lequel les localisations de contrôle du sujet de référence présentent une résolution locale plus faible que les localisations de contrôle du sujet étudié ou les localisations de contrôle du sujet étudié présentent une résolution locale plus faible que les localisations de contrôle du sujet de référence.

17. Unité de détermination de distance parcourue assistée par ordinateur pour déterminer la distance parcourue par un sujet étudié sur un réseau routier prédéterminé, sur lequel au moins un sujet de référence se déplace et/ou s'est déplacé,
avec laquelle, on peut capter, par intervalles de temps donnés, plusieurs signaux émis par le sujet étudié en vue de sa localisation de contrôle spatiale,
avec laquelle on peut déterminer, à partir des signaux de localisation de contrôle captés, des informations de localisation spatio-temporelles quant au sujet étudié,
avec laquelle on peut déterminer au moins un segment de distance parcourue comme partie de route sur le réseau routier prédéterminé, sur lequel le sujet étudié et un des sujets de référence qui se déplace sur le réseau routier effectuent et/ou ont effectué des mouvements respectifs correspondant l'un à l'autre sur les plans spatial et temporel, en comparant les informations de localisation à des informations de mouvements spatio-temporels de sujets de référence, qui se déplacent et/ou se sont déplacés sur le réseau routier, et
avec laquelle les segments de distance parcourue ainsi déterminés peuvent être enregistrés comme distance parcourue dans un résultat de l'échantillonnage.

18. Unité de détermination de distance parcourue assistée par ordinateur selon la revendication précédente,
dans laquelle l'unité se présente, pour la réalisation d'un procédé, sous la forme correspondant à l'une quelconque des revendications de procédé précédentes.

19. Unité de détermination de distance parcourue assistée par ordinateur selon l'une quelconque des deux revendications précédentes,
dans laquelle sont prévus une unité de réception de signaux et un système de serveur avec application back-end relié à l'unité de réception pour déterminer les informations de localisation et le au moins un segment de distance parcourue.

20. Système constitué d'une unité de détermination de distance parcourue assistée par ordinateur selon l'une quelconque des trois revendications précédentes et d'une unité d'émission de signaux de localisation de contrôle qui peut être connectée et/ou est connectée à un sujet étudié

21. Système selon la revendication précédente, comprenant un instrument radio mobile comme unité d'émission de signaux de localisation de contrôle.

22. Utilisation d'un procédé de détermination de distance parcourue, d'une unité de détermination de distance parcourue assistée par ordinateur et/ou d'un système selon l'une quelconque des revendications précédentes pour le calcul de prestations de transport en fonction de la distance parcourue, en particulier dans le domaine de la billetterie électronique, pour fournir la preuve du transport du sujet étudié, pour déterminer la distance parcourue par des personnes sur un réseau routier, en particulier sur un réseau de lignes de bus et/ou de lignes de chemins de fer et/ou de lignes aériennes, pour déterminer la distance parcourue par des unités de transport de charges, en particulier de bagages, de véhicules de manutention ou de conteneurs, sur un réseau routier de transport prédéterminé, en particulier sur un réseau routier de transport de bagages, un réseau routier de transport de manutention au sein d'une usine ou un réseau routier de transport de conteneurs.
